# EUROPEAN PATENT SPECIFICATION

(11) **EP 2 100 721 B1**
(45) Date of publication and mention of the grant of the patent: **14.05.2014**
(21) Application number: 08405069.9
(22) Date of filing: 11.03.2008
(51) Int. Cl.: B32B 7/12, B32B 27/32, B65D 33/08

(54) **Laminate with an area having improved tear resistance**
Laminat mit einem Bereich mit verbesserter Reißfestigkeit
Stratifié doté d'une zone dont la résistance au déchirement est améliorée

(43) Date of publication of application: 16.09.2009
(73) Proprietor: Amcor Flexibles Kreuzlingen Ltd., 8280 Kreuzlingen (CH)
(72) Inventor: Angiolini, Simone, 17043 Carcare (SV) (IT); Della Torre, Andrea, 21052 Busto Arsizio (VA) (IT)
(74) Representative: Gernet, Samuel Andreas

(56) References cited:
- EP-A- 1 129 960
- EP-A- 1 574 447
- WO-A-00/32390
- DE-T2- 69 934 907

## Description

The invention relates to a laminate according to the preamble of claim 1. Also within the scope of the invention are bags or pouches with an intersection line in the form of a punched handle.

For bags or pouches with a punched handle usually laminates with one side being sealable and the other side being printable and having good optical characteristics are used. Known and often used are laminates having two layers of polyethylene and polyester, particularly polyethyleneterephthalate (PET). The tear resistance of bags and pouches made of such laminates often do not meet the requirements in practice. Under the load of the content, the laminates may easily crack at the ends of the intersection line representing the punched handle, which subsequently leads to the break of the handle.

When printed plastic laminates are used, the risk of tearing is linked to the use of bi-oriented PET films usually used for printings which have limited tearing properties. As the propagation effect extends over the whole thickness of the laminate, the other films used in the laminate are selected so as to improve the tear resistance. Customary tear-resistant plastic films consist of polyamide or a polyolefin, such as e.g. polyethylene. Tear proof laminates often include a thick polyethylene film, whereas in addition the adhesion strength between the laminate layers is controlled by a solvent-free lamination, a low adhesive thickness or soft glue. With the thicker plastic film, the material costs increase and the controlled adjustment of the adhesion strength of the adhesive bond requires a complex process monitoring.

In order to improve the resistance of the handle in shopping bags, a plastic reinforcement is applied by means of adhesive or by sealing in the area where the handle is punched. This process is usually performed in the bag making or FFS machine. Also this solution results in additional material costs and additional production steps.

EP-A-1 140 487 discloses a bag or pouch made of a multilayer film consisting of a support layer, a thermoplastic layer and an adhesive layer arranged between the support layer and the thermoplastic layer. A handle in the form of an opening is pouched from the multilayer film. To improve the tear resistance in this area of the packaging a varnish layer is arranged between the support layer and the adhesive layer, thereby reducing the adhesion strength between the support layer and the adhesive layer.

EP-A-1 574 447 discloses a bag made of a two-layer or multilayer laminate with a punched handle, where the laminate consists of at least two films bonded together by means of an adhesive and where the film representing the inner side of the laminate is a sealable plastic film with good elongation properties. The laminate has functional areas in which the adhesion strength between the sealable plastic film representing the inner side and the adjacent film of the laminate is lower than in the areas surrounding the functional areas, and the punched handle is at least partly arranged in these functional areas. In the functional areas, the laminate has a contact area with a pattern having zones with good and bad adhesion, where the zones with bad adhesion represent an area fraction of more than 20 %, relating to the surface of the functional area.

EP-A-1 129 960 discloses a container made of a laminate consisting of two layers bonded together by means of an adhesive layer and having a punched opening as a handle. To improve the tear resistance of the laminate in the region of the handle opening, areas without adhesive between the two material layers are provided.

The object of the invention is to provide a laminate of the kind described at the start having an improved tear resistance in comparison to the prior art laminate. The laminate shall be producible in an easy and cost-saving manner.

That objective is achieved by a laminate with the features of claim 1.

The varnish layer forming the varnish pattern is nitro-based or vinyl-based.

In the laminate according to the present invention, in the area having reduced adhesion strength the first plastic film is coated all over with a first varnish layer reducing the adhesion strength between the first plastic layer and the adhesive layer, and the varnish pattern formed by a second varnish layer is arranged on the first varnish layer. The first varnish layer covering the whole surface is vinyl-based and the second varnish layer forming the varnish pattern is nitro-based, or the first varnish layer is nitro-based and the second varnish layer forming the varnish pattern is vinyl-based.

According to the invention, the improved tear behavior of the laminate is achieved by controlling the tear propagation in alternating small areas with higher and lower adhesion strength. The small areas with low adhesion strength act as physical interruptor of tear propagation. The line- and point-shaped surface elements of the print pattern of the second varnish layer represent the areas with low adhesion strength; the areas of the first varnish layer lying in-between represent the areas with high adhesion strength.

The different adhesion strength results from the reduced cohesion strength between different inks or print varnish systems. It is well known in the art that nitro-based and vinyl-based inks have very low adhesion strength. However, their own cohesion strength to adhesives is generally high and comparable. For this reason, the elements of the print pattern of the second varnish layer applied onto the first varnish layer have low adhesion strength to the first varnish layer lying underneath, i.e. the elements of the print pattern represent the areas with low adhesion strength.

The elements of the varnish pattern can e.g. be parallel lines or substantially point-shaped surface elements, or formed by a continuous surface pattern interrupted by a plurality of surface elements.

The dimensions of the surface elements of the varnish pattern, i.e. the width of the lines and the average diameter of the point-shaped surface elements respectively, as well as the space between the lines and the point-shaped surface elements respectively, are preferably smaller than 2 mm, preferably smaller than 1 mm.

A preferred use of the laminate according to the present invention is the manufacture of bags or pouches with a punched handle in the form of an intersection line, where the ends of the intersection line are arranged within the area with reduced adhesion strength. A suitable laminate is composed of a biaxially oriented first plastic film of polyester, preferably polyethyleneterephthalate (PET), or polypropylene (PP), and a second plastic film of polyethylene (PE).

Further advantages, features and details of the invention are revealed in the following description of preferred exemplified embodiments and with the aid of the drawing which shows schematically in
- Fig. 1: a front view of a shopping bag made of a laminate with punched handle.
- Fig. 2: a cross section along line I-I through the laminate of the bag shown in fig. 1 in the region of the punched handle;
- Fig. 3-7: a view from above on different print patterns in the region of the punched handle.

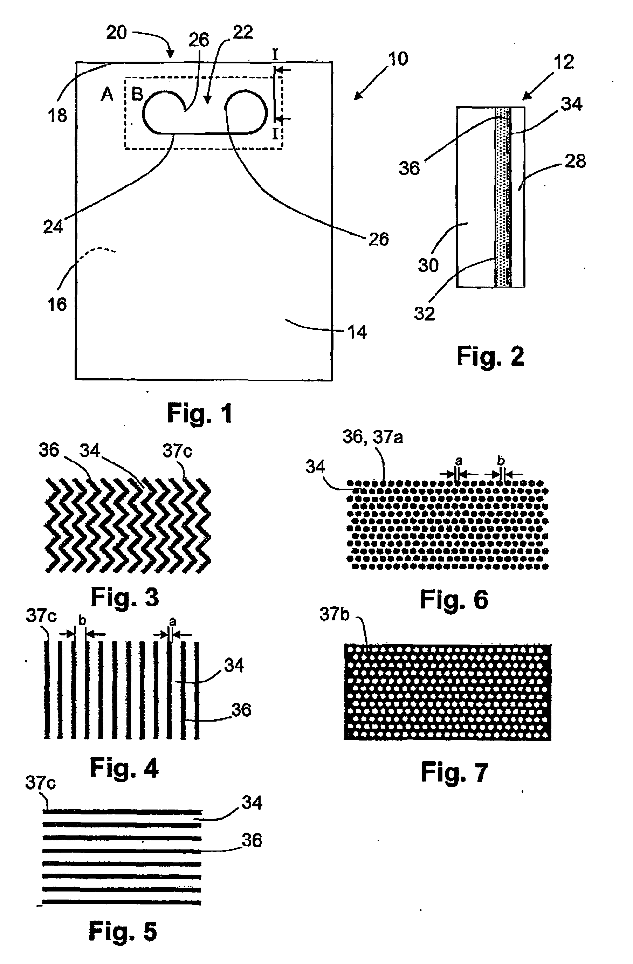

Fig. 1 shows a shopping bag 10 consisting of a pouch opening on one side and sealed on three of four edges by means of sealing or gluing of the laminate 12 shown in Fig. 2 in cross section. The bag 10 has a front side 14 and a rear side 16. In a distance to an edge 18 limiting the bag opening 20 the laminate 12 is provided on its front side 14 and rear side 16 of the bag 10 with an intersection line 24 cut through the laminate 12 and having two ends 26.

In Fig. 1, as shown in dotted lines, in area B surrounding the intersection line 24 the laminate 12 has a structure shown in Fig. 2 having improved tear resistance in comparison to the area A surrounding the area B.

The laminate 12, shown as an example in Fig. 2, comprises a biaxially oriented, printable first plastic film 28 having a thickness of 12 µm made of polyethyleneterephthalate (PET), representing the outer side of the bag 10, and a sealable second plastic film 30 with high tear strength having a thickness of 120 to 150 µm made of polyethylene (PE), representing the inner side of the bag 10. The printable first plastic film 28 and the tear-resistant second plastic film 30 are bonded together by means of an adhesive layer 32 of polyester-based bi-component polyurethane (PU) adhesive to form the laminate 12. The grammage of the adhesive layer 32 applied for laminating amounts to 2 to 3 g/m². Curing time is approximately 3 to 5 days at room temperature.

In the area B with the intersection line 24 the first plastic film 28 is provided on its surface facing the adhesive layer 32 with a first layer 34 of a nitro-based varnish and a second layer 36 of a vinyl-based varnish in the form of a pattern of parallel lines 37c or of point-shaped surface elements 37a.

The areas B, shown in figures 3 to 7, are examples of patterns of the second varnish layer 36 printed onto the first varnish layer 34. The dimensions of the surface elements of the print pattern, i.e. the width a of the lines 37c and the average diameter of the point-shaped surface element 37a respectively, as well as the distance b between lines 37c and the point shaped surface elements 37a respectively, are preferably smaller than 2 mm, particularly smaller than 1 mm. In a matrix point pattern, as for example shown in fig. 6, the point diameter may be 1 mm and the distance between adjacent matrix points may be 0,4 mm.

In a standard test, the adhesion strength in the area B with the varnish layer 36 in the form of a pattern with point-shaped surface elements is approximately 1.5 to 3.5 N/15 mm, in the general area A approximately 2.5 to >> 4 N/15 mm.

The tear strength of laminates has been evaluated by means of a transport simulation test. For this purpose, two bags with equal weight but with different reinforcement of the handle were carried upstairs and downstairs three times and then shaken. In this test, the bags according to the invention featuring the two varnish layers 34, 36 with a point-shaped printed pattern 37a showed the best results.

### List of Reference Numerals

- 10: shopping Bag
- 12: laminates
- 14: front side
- 16: rear side
- 18: edge
- 20: bag opening
- 22: handle
- 24: intersection line
- 26: ends of 24
- 28: first plastic film
- 30: second plastic film
- 32: adhesive layer
- 34: first varnish layer
- 36: second varnish layer
- 37a,b: surface Elements
- 37c: lines, line patterns

- A: area with normal tear strength
- B: area with improved tear strength

## Claims

1. Laminate having at least two plastic films (28, 30) bonded together by means of an adhesive layer (32),
with at least one area (B) having reduced adhesion strength to improve the tear resistance, in which area (B) at least one varnish layer (36) is arranged between a first plastic film (28) and an adjacent adhesive layer (32), thereby reducing the adhesion, the at least one varnish layer (36) is formed by a pattern having a plurality of surface elements (37a) locally reducing the adhesion strength between the first plastic layer (28) and the adhesive layer (32), or by a continuous pattern interrupted by a plurality of surface elements (37a) locally reducing the adhesive strength between the first plastic film (28) and the adhesive layer (32),
**characterized in that**
in the area (B) having reduced adhesion strength the first plastic film (28) is coated all over with a first varnish layer (34) reducing the adhesion strength between the first plastic layer (28) and the adhesive layer (32), and the varnish pattern formed by a second varnish layer (36) is arranged on the first varnish layer (34), the first varnish layer (34) covering the whole surface is vinyl-based and the second varnish layer (36) forming the varnish pattern is nitro-based, or the first varnish layer (34) is nitro-based and the second varnish layer (36) forming the varnish pattern is vinyl-based.

2. Laminate according to claim 1, **characterized in that** the varnish pattern is formed by parallel lines or line patterns (37c) or substantially point-shaped surface elements (37a), or that the varnish pattern is formed by a continuous surface pattern interrupted by a plurality of surface elements (37a).

3. Laminate according to claim 2, **characterized in that** the width (a) of the lines (37c) and the average diameter of the point-shaped surface elements (37a) respectively, as well as the space (b) between the lines (37c) and the point-shaped surface elements (37a) respectively, are smaller than 2 mm, preferably smaller than 1 mm.

4. Laminate according to one of claims 1 to 3, **characterized in that** laminate is composed of a biaxially oriented first plastic film (28) of polyester, preferably polyethyleneterephthalate (PET), or polypropylene (PP), and a second plastic film (30) of polyethylene (PE).

5. Bag or pouch made of a laminate according to one of the preceding claims, with a punched handle (22) in the form of an intersection line (24), where the ends (26) of the intersection line (24) are arranged within the area (B) with reduced adhesion strength.

## Patentansprüche

1. Laminat, das mindestens zwei Kunststofffolien (28, 30) aufweist, die mit Hilfe einer Klebstoffschicht (32) aneinander gebunden sind, und mit mindestens einem Bereich (B), der eine reduzierte Haftfestigkeit aufweist, um die Reißfestigkeit zu verbessern, wobei im Bereich (B) zwischen einer ersten Kunststofffolie (28) und einer angrenzenden Klebstoffschicht (32) mindestens eine Lackschicht (36) angeordnet ist, wodurch das Anhaften reduziert wird, wobei die mindestens eine Lackschicht (36) von einem Muster gebildet wird, das mehrere Oberflächenelemente (37a) aufweist, welche die Haftfestigkeit zwischen der ersten Kunststofffolie (28) und der Klebstoffschicht (32) örtlich reduzieren, oder von einem durchgehenden Muster, das durch mehrere Oberflächenelemente (37a) unterbrochen ist, welche die Haftfestigkeit zwischen der ersten Kunststofffolie (28) und der Klebstoffschicht (32) örtlich reduzieren,
**dadurch gekennzeichnet, dass**
in dem Bereich (B) mit reduzierter Haftfestigkeit die erste Kunststofffolie (28) überall mit einer ersten Lackschicht (34) überzogen ist, welche die Haftfestigkeit zwischen der ersten Kunststofffolie (28) und der Klebstoffschicht (32) reduziert, und das Lackmuster, das von der zweiten Lackschicht (36) gebildet ist, auf der ersten Lackschicht (34) angeordnet ist, wobei die erste Lackschicht (34), welche die gesamte Oberfläche bedeckt, vinyl-basiert ist und die zweite Lackschicht (36), die das Lackmuster bildet, nitro-basiert ist, oder die erste Lackschicht (34) nitro-basiert ist und die zweite Lackschicht (36), die das Lackmuster bildet, vinyl-basiert ist.

2. Laminat nach Anspruch 1, **dadurch gekennzeichnet, dass** das Lackmuster von parallelen Linien oder Linienmustern (37c) gebildet ist oder von im Wesentlichen punktförmigen Oberflächenelementen (37a) oder dass das Lackmuster von einem durchgehenden Oberflächenmuster gebildet ist, das durch mehrere Oberflächenelemente (37a) unterbrochen ist.

3. Laminat nach Anspruch 2, **dadurch gekennzeichnet, dass** die Breite (a) der Linien (37c) beziehungsweise der durchschnittliche Durchmesser der punktförmigen Oberflächenelemente (37a) sowie der Zwischenraum (b) zwischen den Linien (37c) beziehungsweise der punktförmigen Oberflächenelemente (37a) kleiner als 2 mm, vorzugsweise kleiner als 1 mm ist.

4. Laminat nach einem der Ansprüche 1 bis 3, **dadurch gekennzeichnet, dass** das Laminat aus einer biaxial orientierten ersten Kunststofffolie (28) aus Polyester, vorzugsweise Polyethylenterephthalat (PET), oder Polypropylen (PP) und einer zweiten Kunststofffolie (30) aus Polyethylen (PE) zusammengesetzt ist.

5. Tragetasche oder Beutel aus einem Laminat nach einem der vorhergehenden Ansprüche mit einem gestanzten Henkel (22) in Form einer Schnittlinie (24), wobei die Enden (26) der Schnittlinie (24) in dem Bereich (B) mit reduzierter Haftfestigkeit angeordnet sind.

## Revendications

1. Stratifié présentant au moins deux films en matière plastique (28, 30) liés ensemble au moyen d'une couche adhésive (32), avec au moins une zone (B) présentant une résistance d'adhérence réduite pour améliorer la résistance au déchirement, dans laquelle zone (B) au moins une couche de vernis (36) est disposée entre un premier film en matière plastique (28) et une couche adhésive adjacente (32), réduisant par-là l'adhérence, la au moins une couche de vernis (36) est formée par un motif présentant plusieurs éléments de surface (37a) réduisant localement la résistance d'adhérence entre la première couche en matière plastique (28) et la couche adhésive (32), ou par un motif continu interrompu par plusieurs éléments de surface (37a) réduisant localement la résistance d'adhérence entre le premier film en matière plastique (28) et la couche adhésive (32),
**caractérisé en ce que**
dans la zone (B) présentant une résistance d'adhérence réduite le premier film en matière plastique (28) est revêtu sur la totalité avec une première couche de vernis (34) réduisant la résistance d'adhérence entre la première couche en matière plastique (28) et la couche adhésive (32), et le motif de vernis formé par une seconde couche de vernis (36) est disposé sur la première couche de vernis (34), la première couche de vernis (34) couvrant la surface totale est à base de vinyle et la seconde couche de vernis (36) formant le motif de vernis est à base de nitro, ou la première couche de vernis (34) est à base de nitro et la seconde couche de vernis (36) formant le motif de vernis est à base de vinyle.

2. Stratifié selon la revendication 1, **caractérisé en ce que** le motif de vernis est formé par des lignes ou des motifs de lignes (37c) parallèles ou des éléments de surface pratiquement en forme de point (37a), ou **en ce que** le motif de vernis est formé par un motif de surface continu interrompu par plusieurs éléments de surface (37a).

3. Stratifié selon la revendication 2, **caractérisé en ce que** la largeur (a) des lignes (37c) et le diamètre moyen des éléments de surface en forme de point (37a) respectivement, ainsi que l'espace (b) entre les lignes (37c) et les éléments de surface en forme de point (37a) respectivement, sont inférieurs à 2 mm, de préférence inférieurs à 1 mm.

4. Stratifié selon l'une quelconque des revendications 1 à 3, **caractérisé en ce que** le stratifié est constitué d'un premier film en matière plastique biaxialement orienté (28) de polyester, de préférence de polyéthylène téréphtalate (PET), ou de polypropylène (PP), et d'un second film en matière plastique (30) de polyéthylène (PE).

5. Sac ou poche constitué d'un stratifié selon l'une quelconque des revendications précédentes, avec une poignée découpée (22) dans la forme d'une ligne d'intersection (24), où les extrémités (26) de la ligne d'intersection (24) sont disposées à l'intérieur de la zone (B) avec une résistance d'adhérence réduite.
